# EUROPEAN PATENT SPECIFICATION

(11) **EP 2 103 148 B1**
(45) Date of publication and mention of the grant of the patent: **23.03.2016**
(21) Application number: 07851325.6
(22) Date of filing: 07.12.2007
(51) Int. Cl.: H04N 13/00, H04H 20/40

(54) **TRANSMITTING/RECEIVING DIGITAL REALISTIC BROADCASTING INVOLVING BEFOREHAND TRANSMISSON OF AUXILIARY INFORMATION**
SENDEN/EMPFANGEN EINER DIGITALEN REALISTISCHEN AUSSTRAHLUNG MITTELS VORAB-ÜBERTRAGUNG VON HILFSINFORMATION
TRANSMISSION/RÉCEPTION D'UNE DIFFUSION RÉALISTE NUMÉRIQUE AVEC TRANSMISSION AU PRÉALABLE D'INFORMATION AUXILIAIRE

(30) Priority: 08.12.2006 KR 20060125152; 09.10.2007 KR 20070101672
(43) Date of publication of application: 23.09.2009
(73) Proprietor: Electronics and Telecommunications Research Institute, Yuseong-gu Daejon 305-350 (KR)
(72) Inventor: KIM, Sung-Hoon, Daejon 302-726 (KR); LIM, Jong-Soo, Daejon 301-110 (KR); LEE, Soo-In, Daejon 302-120 (KR); YUN, Kug-Jin, Daejon 305-358 (KR); LIM, Hyoungsoo, Daejon 305-761 (KR); KIM, Yang-Su, Daejon 305-308 (KR)
(74) Representative: Vidon Brevets & Stratégie
(86) International application number: PCT/KR2007/006354
(87) International publication number: WO 2008/069613

(56) References cited:
- WO-A1-2005/114998
- JP-A- 2000 078 611
- JP-A- 2004 357 156
- US-A1- 2001 045 979
- US-A1- 2005 165 911
- US-A1- 2006 007 301
- US-A1- 2008 002 776

## Description

### TECHNICAL FIELD

The present invention relates to a transmitting and receiving system for non-realtime based digital realistic broadcasting, and a method thereof; and, more particularly, to a transmitting and receiving system for non-realtime based digital realistic broadcasting and a method thereof, which enable to maintain a low-level compatibility with an existing 2-D digital broadcasting transmitting and receiving system and to prevent the image quality of 2-D broadcasting from deteriorating, which is caused by the transmission of realistic broadcasting auxiliary information such as auxiliary information for 3-D broadcasting.

This work was supported by the Information Technology (IT) research and development program of the Korean Ministry of Information and Communication (MIC) and/or the Korean Institute for Information Technology Advancement (IITA) [2006-S-016-01, "Development of Distributed Translator Technology for Terrestrial DTV"].

### BACKGROUND ART

Conventionally, a three dimensional (3-D) moving image has been serviced based on a digital realistic broadcasting transmitting system and method according to the related art.

A transmitting side transmits a multiplexed digital signal with a packet identifier (PID) for identifying a left image signal and a right image signal as well as another PID for identifying video data or audio data. Then, a receiving side separates left image information and right image information, which are included in received image information as auxiliary information and alternatively displays the separated left image information and the separated right image information, thereby providing further realistic 3-D image through TV that was used to display 2-D images.

In the related art, two different PID values were defined for left image information and right image information. That is, two video streams were generated. Due to such a reason, an existing 2-D system could not identify a left image stream and a right image stream. That is, such 3-D image technology according to the related art is not compatible to the existing 2-D system.

In order to generate a 3-D moving image, image information is required for two images with different viewpoints, one viewpoint image and a disparity map, or one viewpoint image and a depth map. However, a conventional technology only teaches about two images and fails to teach the others.

As described above, the digital realistic broadcasting transmitting and receiving system according to the related art was not compatible with an existing 2-D digital broadcasting transmitting system. The digital realistic broadcasting transmitting and receiving system according to the related art also deteriorates the quality of 2-D images of primary broadcasting due to the transmission of the 3-D auxiliary information.

The Japanese Patent publication JP-A-2000/078611 discloses a 3D scenography system. The 2D image and additional information are multiplexed by a multiplexor and then transmitted to a receiver. The 2D image can be deteriorated due to the transmission of additional information in a same stream.

The PCT publication WO2005114998 proposes a method for transmitting 3D stereoscopic digital broadcasting data using a transport stream that multiplexes 3D video data, audio data and 3D additional data. This solution is similar to that of the above-presented Japanese application. The 2D image can be deteriorated due to the transmission of additional information in a same stream.

Another PCT publication WO2005107264 proposes a method that transmits media content and enhancement data for HD TV. This solution only relates to HD TV service instead of 3D broadcasting service.

The US patent publication US2005/165911 proposes a method that transmits multimedia data and supplemental data for HD TV. It does not relate to 3D broadcasting system.

### DISCLOSURE

### TECHNICAL PROBLEM

An embodiment of the present invention is directed to providing a transmitting and receiving system for non-realtime based digital realistic broadcasting and methods thereof, which enable to maintain a low-level compatibility with an existing 2-D digital broadcasting transmitting and receiving system and to prevent the image quality of 2-D broadcasting from deteriorating, which caused by the transmission of realistic broadcasting auxiliary information such as auxiliary information for 3-D broadcasting.

Other objects and advantages of the present invention can be understood by the following description, and become apparent with reference to the embodiments of the present invention. Also, it is obvious to those skilled in the art of the present invention that the objects and advantages of the present invention can be realized by the means as claimed and combinations thereof.

### TECHNICAL SOLUTION

Different aspects of the invention are provided in the appended independent claims.

### ADVANTAGEOUS EFFECTS

Non-realtime based digital realistic broadcasting transmitting and receiving system according to the present invention transmit and receive AV data and auxiliary information based on a DTV/DMB MPEG-2 system. That is, a transmitting side transmits auxiliary information for realistic broadcasting in advance to a receiving side at a residual time or through a residual stream. The receiving side receives and stores the auxiliary information in a local storage. Then, the receiving side reads the auxiliary information from the local storage and restores a realistic image by synchronizing a 2-D image with the read auxiliary information.

Therefore, the present invention guarantees a low level compatibility with an existing 2-D digital broadcasting transmitting system and prevents the quality of 2-D images from deteriorating.

That is, the present invention enables a user having a conventional digital broadcasting receiver to enjoy 2-D images without image quality deterioration although the user receives realistic broadcasting contents such as 3-D image broadcasting contents. Also, the present invention enables a user having a realistic broadcasting receiver to enjoy high quality 2-D or 3-D images broadcasting.

### BRIEF DESCRIPTION OF THE DRAWINGS

Fig. 1 is a diagram illustrating a non-realtime based digital 3-D broadcasting transmitting system in accordance with an embodiment of the present invention.
Fig. 2 is a diagram illustrating a non-realtime based digital 3-D broadcasting transmitting system in accordance with an embodiment of the present invention.

### BEST MODE FOR THE INVENTION

The present invention relates to a digital realistic broadcasting system for transmitting a 3-D image to a user. The present invention may be applicable to various digital broadcasting schemes such a digital multimedia broadcasting (DMB) scheme and a digital television broadcasting scheme.

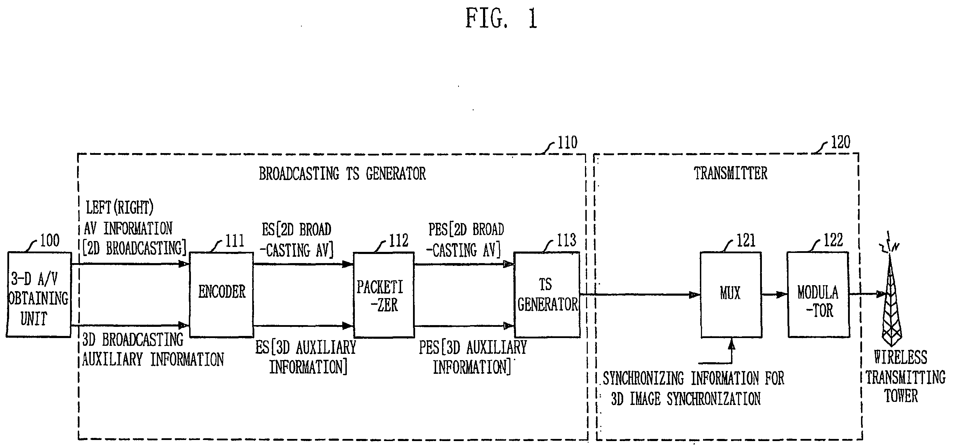

The non-realtime based digital realistic broadcasting transmitting system according to an embodiment of the present invention includes a digital 3-D transmitting system and a digital 3-D receiving system. As shown in Fig. 1, the digital 3-D transmitting system according to the present embodiment transmits auxiliary information for producing a 3-D image to a receiving side in advance using a residual time and a residual stream such as Null packets based on a MPEG-2 system which is currently used for digital broadcasting, independently from an original 2-D video transport stream.

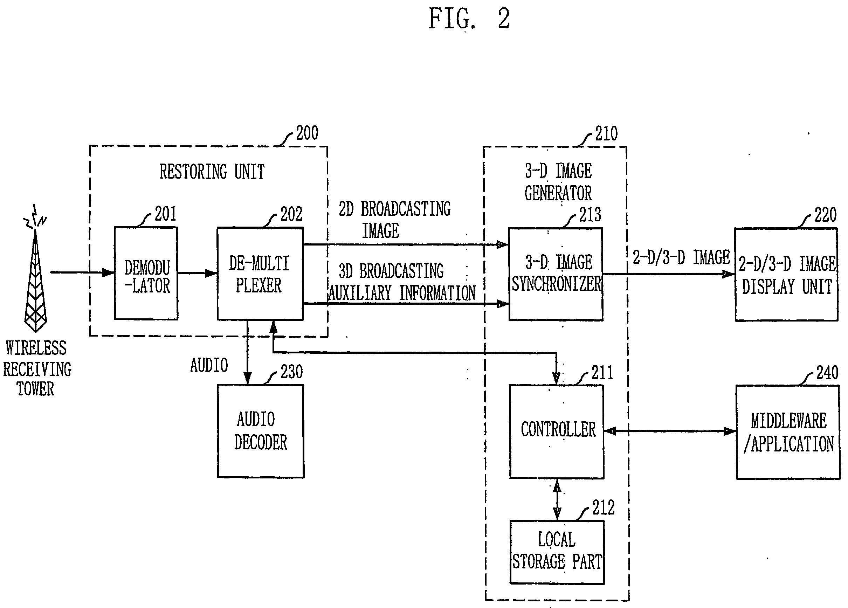

The digital 3-D broadcasting receiving system shown in Fig. 2 stores 3-D auxiliary information that is previously received from the digital 3-D broadcasting transmitting system in a local storage part. When the digital 3-D broadcasting receiving system receives a primary broadcasting signal which is a 2-D TV signal at a broadcasting time, the digital 3-D broadcasting receiving system reads the previously stored 3-D auxiliary information and reproduces the 3-D image by synchronizing the read 3-D auxiliary information with the 2-D original broadcasting signal. That is, the 3-D broadcasting receiving system reads previously stored 3-D auxiliary information from a local storage unit when the 3-D broadcasting system receives the 2-D broadcasting signal, synchronizes the read 3-D auxiliary information with the 2-D broadcasting signal, and reproduces a 3-D image.

The non-realtime based digital 3-D broadcasting transmitting and receiving system guarantee a low level compatibility with an existing 2-D digital broadcasting transmitting system. Since it is not required to allocate a predetermined time or a data slot in a primary broadcasting for transmitting auxiliary data, the non-realtime base digital 3-D broadcasting transmitting and receiving system according to the present invention does not deteriorate the quality of a 2-D image for providing 3-D realistic broadcasting such as 3-D digital broadcasting.

The advantages, features and aspects of the invention will become apparent from the following description of the embodiments with reference to the accompanying drawings, which is set forth hereinafter.

In the present invention, a transmitting side transmits realistic broadcasting auxiliary information to a receiving side in advance before a related 2-D image is transmitted. A receiving side stores the realistic broadcasting auxiliary information received in advance from the transmitting side or inputted from the other input unit. When primary broadcasting starts, the receiving side reproduces realistic images using the stored auxiliary information after restoring 2-D images. Here, the realistic broadcasting means the next generation digital broadcasting including 3-D broadcasting, and sensing broadcasting. The realistic broadcasting auxiliary information means auxiliary information necessary for the next digital broadcasting. Hereinafter, 3-D broadcasting among the realistic broadcasting will be described as an embodiment of the present invention.

Fig. 1 is a diagram illustrating a non-realtime based digital 3-D broadcasting transmitting system in accordance with an embodiment of the present invention. That is, Fig. 1 shows the configuration and the operation of a digital 3-D broadcasting transmitting system which is one type of the digital realistic broadcasting transmitting system according to the present embodiment.

Hereinafter, a method for transmitting 3-D broadcasting, which is performed in a digital 3-D broadcasting transmitting system according to the present embodiment, will be described together.

As shown in Fig. 1, the digital 3-D broadcasting transmitting system according to the present embodiment includes a 3-D AV obtaining unit 100, a broadcasting TS generator 110, and a transmitter 120.

The 3-D AV obtaining unit 100 obtains left and right audio information and video information for 2-D broadcasting and auxiliary information for 3-D broadcasting from 3-D contents. Here, the left and right audio information and video information for 2-D broadcasting will be referred as 2-D AV information, and the auxiliary information for 3-D broadcasting will be referred as 3-D auxiliary information. In another embodiment, the 3-D auxiliary information may input through various on/offline input units such as the Internet and a USB memory and is used for a non-realtime DTV service.

Here, the 3-D auxiliary information is information for producing a 3-D image. For example, the 3-D auxiliary information is auxiliary information for producing a 3-D image in a 3-D TV service of DTV/DMB. The 3-D auxiliary information may be an image of the other view point from 2-D broadcasting image (hereinafter 2-D image). That is, if the 2-D image is a left image, the 3-D auxiliary information is a right image. On the contrary, if the 2-D image is a right image, the 3-D auxiliary information is a left image. The 3-D auxiliary information may be a disparity map, and a depth map.

Then, the broadcasting TS generator 110 generates TS streams (TS) individually for the AV information and the 3-D auxiliary information inputted from the 3-D AV obtaining unit 100. In more detail, the broadcasting TS generator 110 includes an encoder 111, a packetizer 112, and a TS generator 113.

The encoder 111 generates elementary streams for AV information and 3-D auxiliary information by individually encoding the AV information including audio data and 2-D image and the 3-D auxiliary information, which are inputted from the 3-D AV obtaining unit 100.

Here, a MPEG-2 encoder may be used as the encoder 111. Or, an encoder having an excellent compression rate may be used among widely used encoding schemes according to information to encode, for example, MPEG-4 AVC for auxiliary information.

The packetizer 112 generates a packetized elementary stream (PES) by packetizing 2-D AV elementary streams (ES) and 3-D auxiliary elementary stream (ES) from the encoder 111.

The TS generator 113 generates a transport stream (TS) for the PES outputted from the packetizer 112. That is, the TS generator 113 outputs 2-D AV TS, which is audio TS and 2-D image TS, and 3-D auxiliary information TS.

Then, the transmitter 120 transmits the 3-D auxiliary information TS in advance before a corresponding broadcasting time and transmits the 2-D AV TS according to a predetermined broadcasting schedule. The transmitter 120 includes a multiplexer (MUX) 121 and a modulator 122.

The MUX 121 multiplexes the 2-D AV TS, the 3-D auxiliary information TS, and synchronizing information for 3-D image synchronization, and transmits the multiplexed signal to a receiving side through the modulator 122. Here, the 3-D auxiliary TS is transmitted at a residual time or using a residual data transport stream such as a NULL packet in advance. The residual time means a time that TV broadcasting is not serviced. That is, the residual time may be a time after the TV broadcasting ends and before the TV broadcasting starts. That is, the 3-D auxiliary TS is transmitted before a corresponding broadcasting time. In contrast, the 2-D AV TS is transmitted to the receiving side according to the corresponding broadcasting schedule. Here, the multiplexed 3-D auxiliary information and synchronizing information for 3-D image synchronization are information used for reproducing 3-D images.

In the present embodiment shown in Fig. 1, the 3-D auxiliary information is inputted to the encoder 111 and processed through the TS generator 113. However, 3-D auxiliary information may be directly inputted to the multiplexer 121 through "data broadcasting" without inputting to the encoder 111. That is, the multiplexer 121 may independently receive 3-D auxiliary information TS through "data broadcasting" and transmit the 3-D auxiliary information TS to a receiving side in advance.

The modulator 122 modulates the multiplexed TS from the multiplexer 121 based on a digital broadcasting specification and transmits the modulated signal to a receiving side.

Fig. 2 is a diagram illustrating a non-realtime based digital 3-D broadcasting receiving system in accordance with an embodiment of the present invention. That is, Fig. 2 shows the configuration and the operation of a digital 3-D broadcasting receiving system which is one type of the digital realistic broadcasting receiving system according to the present embodiment.

Hereinafter, a method for receiving 3-D broadcasting, which is performed in a digital 3-D broadcasting receiving system according to the present embodiment, will be described together.

As shown in the digital 3-D broadcasting receiving system according to the present embodiment includes a restoring unit 200, a 3-D image generator 210, a 2-D/3-D image display unit 220, an audio decoder 230, and a middleware/application 240.

The restoring unit 200 receives a digital broadcasting signal and restores 2-D image, 3-D auxiliary information, and synchronizing information for 3-D image. The restoring unit 200 includes a demodulator 201 and a de-multiplexer (DeMux) 202.

At first, the demodulator 201 demodulates a digital broadcasting signal received through an antenna to a transport stream (TS).

The de-multiplexer 202 separates a 2-D TS, an audio TS, a 3-D auxiliary information TS, and a synchronizing information TS from the TS inputted from the demodulator 201. The separated transport streams (TS) are de-packetized to an elementary stream (ES) and decoded again. That is, the de-multiplexer 202 obtains a 2-D TS, an audio TS, a 3-D auxiliary information TS, and a synchronizing information TS from the TS.

Here, the 3-D auxiliary information is obtained from a transport stream transmitted at a residual time where a primary broadcasting is not serviced or a transport stream for residual data. The obtained 3-D auxiliary information is stored in the local storage part 212.

The 3-D image generator 210 may be a realistic image generator. The 3-D image generator 210 stores the 3-D auxiliary information restored before a corresponding broadcasting time through the restoring unit 200 and generates 3-D image using the stored 3-D auxiliary information and 2-D image. The 3-D image generator 210 includes a control logic part 211, a local storage part 212, and a 3-D image synchronizer 213.

The controller 211 controls the de-multiplexing operation of the de-multiplexer 202. If 3-D auxiliary information is recognized by analyzing a TS packet, the 3-D auxiliary information is stored in the local storage part 212, and the corresponding information is registered at the middleware of a broadcasting receiver or an application 240.

The controller 211 also determines whether a 3-D image will be reproduced in later according to a request of a user or not. If a user or a broadcasting station requests to reproduce a 3-D image, the controller 211 reproduces a 3-D image. When it is required to reproduce a 3-D image, a 2-D image is received and processed according to a broadcasting schedule, and the controller 211 is informed that the 2-D image is received and processed. Then, the controller 211 reads corresponding 3-D auxiliary information from the local storage part 212 and transfers the read 3-D auxiliary information to the 3-D image synchronizer 213. That is, the controller 211 reads the previously stored 3-D auxiliary information from the local storage part 212 when the primary broadcasting signal is received and transfers the read 3-D auxiliary information to the 3-D image synchronizer 213.

Furthermore, the controller 211 controls the generation of the 3-D image from the 3-D image synchronizing unit 202 using the synchronizing information for 3-D image synchronization, which is extracted from the de-multiplexer 202.

The 3-D image synchronizer 213 bypasses the 2-D image inputted from the de-multiplexer 202 or reproduces a 3-D image by synchronizing the 2-D image and the 3-D auxiliary information from the de-multiplexer 202 and outputs the reproduced 3-D image to the 2-D/3-D image display unit 220.

That is, the 3-D image synchronizer 213 confirms a display type inputted from a user. If the display type is the display of a 2-D image, the 3-D image synchronizer 213 ignores the 3-D auxiliary information and bypasses an original image such as 2-D image to the 2-D/3-D image display unit 220. If a display type requested by a user is the display of a 3-D image, the 3-D image synchronizer 213 generates a 3-D image by synchronizing the 2-D image with the 3-D image auxiliary information based on the synchronizing information for 3-D image synchronization and outputs the generated 3-D image to the 2-D/3-D image display unit 220.

In the process of generating a 3-D image, 3-D auxiliary information formed of the odd field images and the even field images of a video signal are mixed line by line, thereby generating a SD level 3-D image. Here, garbage data included in the 3-D auxiliary information is ignored. Also, the resolution of the 3-D image varies according to the characteristics of an image display unit such as a monitor. Accordingly, an enlargement and reduction module may be included for enlarging and reducing a video signal when the video signal is displayed.

For example, the 3-D image synchronizer 213 uses a proper 3-D image generation algorithm according to the type of 3-D auxiliary information such as a right image, a left image, a disparity map, and a depth map.

In the 3-D image generation process, it is important to accurately synchronize the 2-D image such as a left image and the 3-D auxiliary information such as a right image in a frame unit in order to improve the solidity of an image while reducing a visual stress of a user.

The 2-D/3-D image display unit 220 displays a 2-D image or a 3-D image received from the 3-D image synchronizer 213. The audio decoder 230 reproduces an audio stream received from the de-multiplexer 202.

The controller 211 synchronizes the 2-D image or the 3-D image outputted from the 3-D image synchronizer 213 to the 2-D/3-D image display unit 220 with the audio outputted from the audio decoder 230.

In the present embodiment, the digital 3-D broadcasting receiving system according to the present embodiment obtains the 3-D auxiliary information transmitted through a broadcasting network, and stores and uses the obtained 3-D auxiliary information to generate a 3-D image. However, the digital 3-D broadcasting receiving system may receive the 3-D auxiliary information through the Internet or from the other units such as a USB memory, store the received 3-D auxiliary information in the local storage part 212, and use the stored 3-D auxiliary information in another embodiment.

The 3-D broadcasting was described as an example of the realistic broadcasting in the present embodiment. However, the present invention is not limited thereto.

The above described method according to the present invention can be embodied by a program stored on a computer readable recording medium in conjunction with corresponding hardware components controlled by the program. The computer readable recording medium is any data storage device that can store data which can be thereafter read by the computer system. The computer readable recording medium includes a read-only memory (ROM), a random-access memory (RAM), a CD-ROM, a floppy disk, a hard disk and an optical magnetic disk.
While the present invention has been described with respect to certain preferred embodiments, it will be apparent to those skilled in the art that various changes and modifications may be made without departing from the scope of the invention as defined in the following claims.

## Claims

1. A non-realtime digital broadcasting transmitting system comprising:
- means for generating (110) and transmitting (120) a primary transport stream including 2D image broadcasting data, said primary transport stream being transmitted at a broadcasting time according to a broadcasting schedule;
- means for transmitting (120) an auxiliary transport stream (TS) including auxiliary image information for a three dimensional (3D) broadcasting service, said three-dimensional broadcasting service including the 2D image broadcasting data transmitted by the primary transport stream, said auxiliary transport stream being transmitted before a corresponding broadcasting time of said primary transport stream according to said broadcasting schedule; and
- means for transmitting (120) a synchronizing information for synchronizing between a primary image in the primary transport stream and an auxiliary image in the auxiliary transport stream by multiplexing the synchronizing information with the primary transport stream,
wherein the means for transmitting the auxiliary transport stream are arranged to transmit the auxiliary transport stream to a receiving side at a residual time where a primary broadcasting by said means for generating and transmitting the primary transport stream is not serviced.

2. The broadcasting transmitting system of claim 1, wherein the auxiliary transport stream is received from an external device.

3. The broadcasting transmitting system of claim 1, wherein the means for transmitting the auxiliary transport stream are arranged to transmit the auxiliary transport stream (TS) to a receiving side using a residual data transport stream.

4. A non-realtime digital broadcasting receiving system comprising:
- means for receiving (201) a primary transport stream including 2D image broadcasting data including at least one primary image at a broadcasting time according to a broadcasting schedule,
- means for receiving (201) an auxiliary transport stream including auxiliary image information for a three-dimensional broadcasting service, said three-dimensional broadcasting service including the received 2D image broadcasting data;
- means for storing (212) the auxiliary image information including at least one auxiliary image, wherein said means for receiving the auxiliary transport stream and said means for storing the auxiliary transport stream are arranged to receive and store the auxiliary transport stream before a corresponding broadcasting time of said primary transport stream according to said broadcasting schedule;
- means for de-multiplexing (202), from said primary transport stream, synchronizing information for synchronizing between a said primary image and a said auxiliary image,
- means for generating (210) a 3D image from a received primary image and a stored auxiliary image, using the synchronizing information,
wherein the means for receiving the auxiliary transport stream is arranged to receive the auxiliary transport stream at a residual time where a primary broadcasting for said means for receiving the primary transport stream is not serviced.

5. The broadcasting receiving system of claim 4, wherein the image generation means includes:
- a control means (211) for causing said storing of said auxiliary image information obtained before a corresponding broadcasting time through the de-multiplexing means, transferring the stored auxiliary image information according when a corresponding broadcasting starts and controlling a process of generating a 3D image using the obtained synchronizing information from the de-multiplexing means; and
- an image synchronizing means for bypassing a primary image from the demultiplexing means or generating a 3D image by synchronizing the primary image with the auxiliary information, said image synchronizing means being arranged to select one of said bypassing and said synchronizing, depending on a display type request from a user.

6. The broadcasting receiving system of claim 5, wherein the image generation means are arranged to receive the auxiliary image information from an external device, store the received auxiliary information, and use the stored auxiliary information for generating the 3-D image.

7. A method for transmitting digital broadcasting data, comprising the steps of:
- generating (110, 120) and transmitting a primary transport stream including 2D image broadcasting data, said transmitting being at a broadcasting time according to a broadcasting schedule;
- transmitting (120) an auxiliary transport stream (TS) including auxiliary image information for a three dimensional (3D) broadcasting service, said three-dimensional broadcasting service including the 2D image broadcasting data transmitted by the primary transport stream, said transmitting of the auxiliary transport stream being before a corresponding broadcasting time of said primary transport stream according to said broadcasting schedule; and
- transmitting (120) a synchronizing information for synchronizing between a primary image in the primary transport stream and an auxiliary image in the auxiliary transport stream by multiplexing the synchronizing information with the primary transport stream,
wherein the auxiliary transport stream is transmitted to a receiving side at a residual time where a primary broadcasting by said transmitting of the primary transport stream is not serviced.

8. A method for receiving digital broadcasting data comprising the steps of:
- receiving (201) a primary transport stream including 2D image broadcasting data including at least one primary image at a broadcasting time according to a broadcasting schedule;
- receiving (201) an auxiliary transport stream including auxiliary image information for a three-dimensional broadcasting service, said three-dimensional broadcasting service including the received 2D image broadcasting data;
- storing (212) the auxiliary image information including at least one auxiliary image, said receiving of the auxiliary transport stream and said storing being before a corresponding broadcasting time of said primary transport stream according to said broadcasting schedule;
- de-multiplexing (202), from said primary transport stream, synchronizing information for synchronizing between a said primary image and a said auxiliary image; and
- generating (210) a 3D image from a received primary image and a stored auxiliary image, using the synchronizing information,
wherein the auxiliary transport stream is received at a residual time where a primary broadcasting for said receiving of the primary transport stream is not serviced.

## Patentansprüche

1. Nicht-Echtzeit Digitalrundfunkübertragungssystem, mit:
- Mitteln zum Erzeugen (110) und Übertragen (120) eines Primärtransportstroms umfassend 2D-Bildrundfunkdaten, wobei der Primärtransportstrom zu einer Rundfunkzeit gemäß einem Rundfunkplan übertragen wird;
- Mitteln zum Übertragen (120) eines Hilfstransportstroms (TS) umfassend Hilfsbildinformationen für einen dreidimensionalen (3D) Rundfunkdienst, wobei der dreidimensionale Rundfunkdienst die von dem Primärtransportstrom übertragenen 2D-Bildrundfunkdaten umfasst, wobei der Hilfstransportstrom vor einer entsprechen-den Rundfunkzeit des Primärtransportstroms gemäß dem Rundfunkplan übertragen wird; und
- Mitteln zum Übertragen (120) einer Synchronisierinformation zum Synchronisieren zwischen einem Primärbild in dem Primärtransportstrom und einem Hilfsbild in dem Hilfstransportstrom durch Multiplexen der Synchronisierinformation mit dem Primärtransportstrom,
wobei die Mittel zum Übertragen des Hilfstransportstroms angeordnet sind, den Hilfstransportstrom zu einer Restzeit an eine Empfangsseite zu übertragen, zu der ein Primärrundfunk durch die Mittel zum Erzeugen und Übertragen des Primärtransportstroms nicht bedient wird.

2. Rundfunkübertragungssystem nach Anspruch 1, wobei der Hilfstransportstrom aus einer externen Vorrichtung empfangen wird.

3. Rundfunkübertragungssystem nach Anspruch 1, wobei die Mittel zum Übertragen des Hilfstransportstroms angeordnet sind, den Hilfstransportstrom (TS) zu einer Empfangsseite unter Verwendung eines Restdatentransportstroms zu übertragen.

4. Nicht-Echtzeit Digitalrundfunkempfangssystem, mit:
- Mitteln zum Empfangen (201) eines Primärtransportstroms umfassend 2D-Bildrundfunkdaten mit wenigstens einem Primärbild zu einer Rundfunkzeit gemäß einem Rundfunkplan,
- Mitteln zum Empfangen (201) eines Hilfstransportstroms umfassend Hilfsbildinformationen für einen dreidimensionalen Rundfunkdienst, wobei der dreidimensionale Rundfunkdienst die empfangenen 2D-Bildrundfunkdaten umfasst;
- Mitteln zum Speichern (212) der Hilfsbildinformationen umfassend wenigstens ein Hilfsbild, wobei die Mittel zum Empfangen des Hilfstransportstroms und die Mittel zum Speichern des Hilfstransportstroms angeordnet sind, den Hilfstransportstrom vor einer entsprechenden Rundfunkzeit des Primärtransportstroms gemäß dem Rundfunkplan zu empfangen und zu speichern;
- Mitteln zum Demultiplexen (202), aus dem Primärtransportstrom, von Synchronisierinformationen zum Synchronisieren zwischen einem der Primärbilder und einem der Hilfsbilder,
- Mitteln zum Erzeugen (210) eines 3D-Bildes aus einem empfangenen Primärbild und einem gespeicherten Hilfsbild unter Verwendung der Synchronisierinformationen,
wobei die Mittel zum Empfangen des Hilfstransportstroms angeordnet sind, den Hilfstransportstrom während einer Restzeit zu empfangen, zu der ein Hauptrundfunk für die Mittel zum Empfangen des Haupttransportstroms nicht bedient wird.

5. Rundfunkempfangssystem nach Anspruch 4, wobei die Bilderzeugungsmittel umfassen:
- ein Steuermittel (211) zum Verursachen des Speicherns der vor einer entsprechenden Rundfunkzeit erhaltenen Hilfsbildinformationen durch die Demultiplexmittel, des Übertragens der gespeicherten Hilfsbildinformationen gemäß einem Anfang eines entsprechenden Rundfunks und des Steuerns eines Prozesses des Erzeugens eines 3D-Bildes unter Verwendung der von den Demultiplexmitteln erhaltenen Synchronisierinformationen; und
- ein Bildsynchronisiermittel zum Umleiten eines Primärbildes von den Demultiplexmitteln oder Erzeugen eines 3D-Bildes durch Synchronisieren des Primärbildes mit der Hilfsinformation, wobei das Bildsynchronisiermittel angeordnet ist, in Abhängigkeit einer Anfrage einer Anzeigeart von einem Benutzer eines aus dem Umleiten und dem Synchronisieren auszuwählen.

6. Rundfunkempfangssystem nach Anspruch 5, wobei die Bilderzeugungsmittel angeordnet sind, die Hilfsbildinformationen von einer externen Vorrichtung zu empfangen, die empfangenen Hilfsinformationen zu speichern und die gespeicherten Hilfsinformationen zum Erzeugen des 3D-Bildes zu verwenden.

7. Verfahren zum Übertragen digitaler Rundfunkdaten, das die folgenden Schritte aufweist:
- Erzeugen (110, 120) und Übertragen eines Primärtransportstroms umfassend 2D-Bildrundfunkdaten, wobei das Übertragen zu einer Rundfunkzeit gemäß einem Rundfunkplan erfolgt;
- Übertragen (120) eines Hilfstransportstroms (TS) umfassend Hilfsbildinformationen für einen dreidimensionalen (3D) Rundfunkdienst, wobei der dreidimensionale Rundfunkdienst die von dem Primärtransportstrom übertragenen 2D-Bildrundfunkdaten umfasst, wobei das Übertragen des Hilfstransportstroms vor einer entsprechenden Rundfunkzeit des Primärtransportstroms gemäß dem Rundfunkplan erfolgt; und
- Übertragen (120) einer Synchronisierinformation zum Synchronisieren zwischen einem Primärbild in dem Primärtransportstrom und einem Hilfsbild in dem Hilfstranssportstrom durch Multiplexen der Synchronisierinformation mit dem Primärtransportstrom,
wobei der Hilfstransportstrom zu einer Restzeit an eine Empfangsseite übertragen wird, zu der ein Primärrundfunk durch das Übertragen des Primärtransportstroms nicht bedient wird.

8. Verfahren zum Empfangen digitaler Rundfunkdaten, das die folgenden Schritte aufweist:
- Empfangen (201) eines Primärtransportstroms umfassend 2D-Bildrundfunkdaten mit wenigstens einem Primärbild zu einer Rundfunkzeit gemäß einem Rundfunkplan;
- Empfangen (201) eines Hilfstransportstroms umfassend Hilfsbildinformationen für einen dreidimensionalen Rundfunkdienst, wobei der dreidimensionale Rundfunkdienst die empfangenen 2D-Bildrundfunkdaten umfasst;
- Speichern (212) der Hilfsbildinformationen umfassend wenigstens ein Hilfsbild, wobei das Empfangen des Hilfstransportstroms und das Speichern vor einer entsprechenden Rundfunkzeit des Primärtransportstroms gemäß dem Rundfunkplan erfolgt;
- Demultiplexen (202), aus dem Primärtransportstrom, von Synchronisierinformationen zum Synchronisieren zwischen einem der Primärbilder und einem der Hilfsbilder; und
- Erzeugen (210) eines 3D-Bildes aus einem empfangenen Primärbild und einem gespeicherten Hilfsbild unter Verwendung der Synchronisierinformationen,
wobei der Hilfstransportstrom zu einer Restzeit, zu der ein Primärrundfunk für das Empfangen des Primärtransportstroms nicht bedient wird, empfangen wird.

## Revendications

1. Système de transmission de diffusion numérique non en temps réel comprenant :
- des moyens de génération (110) et de transmission (120) d'un flux de transport principal incluant des données de diffusion d'image 2D, ledit flux de transport principal étant émis à un instant de diffusion selon un planning de diffusion ;
- des moyens de transmission (120) d'un flux de transport auxiliaire (TS) incluant des informations d'image auxiliaires pour un service de diffusion tridimensionnel (3D), ledit service de diffusion tridimensionnel incluant les données de diffusion d'image 2D transmises par le flux de transport principal, ledit flux de transport auxiliaire étant transmis avant un instant de diffusion correspondant dudit flux de transport principal selon ledit planning de diffusion ; et
- des moyens de transmission (120) d'une information de synchronisation pour la synchronisation entre une image principale dans le flux de transport principal et une image auxiliaire dans le flux de transport auxiliaire par un multiplexage des informations de synchronisation avec le flux de transport principal,
dans lequel les moyens de transmission du flux de transport auxiliaire sont agencés pour transmettre le flux de transport auxiliaire à un côté récepteur à un instant résiduel auquel une diffusion principale par lesdits moyens de génération et de transmission du flux de transport principal n'est pas en service.

2. Système d'émission de diffusion selon la revendication 1, dans lequel le flux de transport auxiliaire est reçu d'un dispositif externe.

3. Système d'émission de diffusion selon la revendication 1, dans lequel les moyens de transmission du flux de transport auxiliaire sont agencés pour transmettre le flux de transport auxiliaire (TS) à un côté récepteur à l'aide d'un flux de transport de données résiduelles.

4. Système de réception de diffusion numérique non en temps réel comprenant :
- des moyens de réception (201) d'un flux de transport principal incluant des données de diffusion d'image 2D incluant au moins une image principale à un instant de diffusion selon un planning de diffusion,
- des moyens de réception (201) d'un flux de transport auxiliaire incluant des informations d'image auxiliaires pour un service de diffusion tridimensionnel, ledit service de diffusion tridimensionnel incluant les données de diffusion d'image 2D reçues ;
- des moyens de stockage (212) des informations d'image auxiliaires incluant au moins une image auxiliaire, dans lequel lesdits moyens de réception du flux de transport auxiliaire et lesdits moyens de stockage du flux de transport auxiliaire sont agencés pour recevoir et stocker le flux de transport auxiliaire avant un instant de diffusion correspondant dudit flux de transport principal selon ledit planning de diffusion ;
- des moyens de démultiplexage (202), à partir dudit flux de transport principal, d'une information de synchronisation pour une synchronisation entre une dite image principale et une dite image auxiliaire,
- des moyens de génération (210) d'une image 3D à partir d'une image principale reçue et d'une image auxiliaire stockée, à l'aide de l'information de synchronisation,
dans lequel les moyens de réception du flux de transport auxiliaire sont agencés pour recevoir le flux de transport auxiliaire à un instant résiduel auquel une diffusion principale pour lesdits moyens de réception du flux de transport principal n'est pas en service.

5. Système de réception de diffusion selon la revendication 4, dans lequel les moyens de génération d'image incluent :
- des moyens de commande (211) pour provoquer ledit stockage desdites informations d'image auxiliaires obtenues avant un instant de diffusion correspondant par le biais des moyens de démultiplexage, le transfert des informations d'image auxiliaires stockées selon qu'une diffusion correspondante démarre et la commande d'un processus de génération d'une image 3D à l'aide de l'information de synchronisation obtenue des moyens de démultiplexage ; et
- des moyens de synchronisation d'image pour un passage libre d'une image principale provenant des moyens de démultiplexage ou pour une génération d'une image 3D par synchronisation de l'image principale avec les informations auxiliaires, lesdits moyens de synchronisation d'image étant agencé pour sélectionner un dudit passage libre et de ladite synchronisation, en fonction d'une demande de type d'affichage en provenance d'un utilisateur.

6. Système de réception de diffusion selon la revendication 5, dans lequel les moyens de génération d'image sont agencés pour recevoir les informations d'image auxiliaires d'un dispositif externe, stocker les informations auxiliaires reçues et utiliser les informations auxiliaires stockées pour générer l'image 3D.

7. Procédé de transmission de données de diffusion numériques, comprenant les étapes suivantes :
- génération (110, 120) et transmission d'un flux de transport principal incluant des données de diffusion d'image 2D, ladite transmission ayant lieu à un instant de diffusion selon un planning de diffusion ;
- transmission (120) d'un flux de transport auxiliaire (TS) incluant des informations d'image auxiliaires pour un service de diffusion tridimensionnel (3D), ledit service de diffusion tridimensionnel incluant les données de diffusion d'image 2D transmises par le flux de transport principal, ladite transmission du flux de transport auxiliaire ayant lieu avant un instant de diffusion correspondant dudit flux de transport principal selon ledit planning de diffusion ; et
- transmission (120) d'une information de synchronisation pour une synchronisation entre une image principale dans le flux de transport principal et une image auxiliaire dans le flux de transport auxiliaire par un multiplexage de l'information de synchronisation avec le flux de transport principal,
dans lequel le flux de transport auxiliaire est transmis à un côté récepteur à un instant résiduel auquel une diffusion principale par ladite transmission du flux de transport principal n'est pas en service.

8. Procédé de réception de données de diffusion numériques comprenant les étapes suivantes :
- réception (201) d'un flux de transport principal incluant des données de diffusion d'image 2D incluant au moins une image principale à un instant de diffusion selon un planning de diffusion ;
- réception (201) d'un flux de transport auxiliaire incluant des informations d'image auxiliaires pour un service de diffusion tridimensionnel, ledit service de diffusion tridimensionnel incluant les données de diffusion d'image 2D reçues ;
- stockage (212) des informations d'image auxiliaires incluant au moins une image auxiliaire, ladite réception du flux de transport auxiliaire et ledit stockage ayant lieu avant un instant de diffusion correspondant dudit flux de transport principal selon ledit planning de diffusion ;
- démultiplexage (202), à partir dudit flux de transport principal, d'une information de synchronisation pour la synchronisation entre une dite image principale et une dite image auxiliaire ; et
- génération (210) d'une image 3D à partir d'une image principale reçue et d'une image auxiliaire stockée, à l'aide de l'information de synchronisation,
dans lequel le flux de transport auxiliaire est reçu à un instant résiduel auquel une diffusion principale pour ladite réception du flux de transport principal n'est pas en service.
